# EUROPEAN PATENT APPLICATION

(11) **EP 0 834 479 A1**
(43) Date of publication of application: **08.04.1998**
(21) Application number: 97115580.9
(22) Date of filing: 09.09.1997
(51) Int. Cl.: C03B 33/07, B27B 5/07, B24B 9/10, B24B 27/06

(54) **Process for cutting of glass sheets, standard, laminated not armored**

(30) Priority: 13.09.1996 IT TV960110
(71) Applicant: FOR.EL. BASE di VIANELLO FORTUNATO & C. S.n.c., 31056 Vallio di Roncade (Treviso) (IT)
(72) Inventor: Vianello, Fortunato, 31056 Vallio di Roncade (TV) (IT)

(57) **Abstract**

The present application has for object an automatic or semiautomatic procedure for the cutting of the plates of glass and more particularly of the plates of stratified glass (in this case the procedure interests both the two glasses and the membrane interposed between them), substantial mainly in the concept to perform: in a first phase the cutting (composed in sequence from the phases of incision, breaking and possible separation of the membrane in the case of stratified glasses) of the plate according to a parallel line to a side of the plate, in a second phase the translation of the cut band, in a third phase the rotation of the same band, in a fourth phase of translation of the same band, in a fifth phase the cut of the band according to a parallel line to the other side of the original plate and in ulterior progressives phases concerning both the bands and the plate until the completion of the splitting up of the plate. The procedure is performed on the plate in vertical or slightly sloped position in respect to the vertical plane but an application on the plate in horizontal position is not excluded.

## Description

Nowadays it is known to effect the cut of the plates of glass and the plates of laminated glass exclusively on so-called "cutting tables" that effect the whole process on the plate of glass laid outin horizontal position.
The so-called "stratified glass" or "coupled glass" constituted by two plates of single glass joined for through of a membrane of plastic product, for example the polyvinyl, which unites in irreversible way the two plates of glass to constitute a " multilayer " that acquires so elevated mechanical characteristics what the greatest moment of inertia and module of resistance to bending and insuperable characteristics of resistance to the staving in as the brittleness of the glass, also characteristic of the single plate remaining, is compensated intimately by the notable elastic resistance of the mediate membrane. Typically the single plates of glass, in the most diffused solutions, have a thickness that goes from 3 to 6 mm, while the membrane of polyvinyl is being realized using one or more sheets whose single thickness is of 0.38 mm.

The process of manufacture, that unites intimately both the plates and the membrane, consist in the principal followings but not exclusive phases: washing and drying of the single plates, layout of the sheet or the sheets of polyvinyl in horizontal order on the inferior plate, laying of the superior plate, pressing of the whole assembling plate/membrane/plate on horizontal heated roller press, final treatment in autoclave to elevated temperature.

This process is applied actually typically to the maximum dimensions of the laminated glass of 6000 mm by 3210 mm, and the today's tendency is of to use the most possible this maximum format in how much logically the plate is great and great anymore it is the optimization of the waste originated by the following process of cutting.

In the case of plates of single glass the cuts and following breakages, that are realized either with manual procedure or semiautomatic or automatic can be performed according to an axis or according to two axis orthogonal between them or according to a combination of the two orthogonal axis getting so the shaped so-called cut.

In the case of plates of stratified glass the cut and the breaking of the glass and the cut or fusion or tear of her or the membranes are carried out, in the horizontal process, only according to an axis in correspondence of a fixed " bridge ", with it intending a part of a machine constituted by a beam containing the various tools of cut, breaking and separation of the membrane. You gets so a so-called band (and therefore a portion of the plate) that is separated by the rest of the plate of glass through a translation and manual rotation to be able to generally perform subsequently the same precedents operations according to another orthogonal axis (or however inclined) in comparison to what has created the same band.
Such following operation happens in correspondence of the same " bridge " that has effected the preceding operations. In alternative to the system to rotate the band manually to bring it under the precedent " bridge " is known the procedure that uses a second " bridge ", orthogonal in respect to the first one, on which the band, always on a horizontal plan and eventually in automatic way, is translated for the obtaining of the following cuts orthogonal to the precedent.

All these described methods suffer of three notable limits: his not total automation, the enormous encumbrance of the relative machines in how much operating with the plate of glass in horizontal position a space is necessary in plant equal to the dimension of the plate (typically 6000 mm 3210 mm), anymore the space for the rotation of the band or for the translation of the same one to the following bridge, anymore the dimension of the part of the working machines over the border of the same plate and finally the demand to manipulate the process material continually (glass) changing it of position, from the vertical position (arrival of trucks and storing) to that horizontal (cut) to that vertical again (following workmanships, for example manufacture of glass insulator and consignment of the ended product). The everything besides without then being able to exploit the part of the impending building the machine as having an extension notable in plant but at the same time conditioned by the height of the establishment that must be proportioned with the other machines of the glassworks that have considerable heights typically, or however very superior to that of the cutting table.

They are also known procedure and car for the cut of the laminated glass and armored glass of notable thickness working vertically but with the employment of a grinding stone in flow of water. The slowness of the process and the notable cost of the machine has the consequence that they are applicable only to multilayers glasses of elevated thickness and absolutely not applicable for laminated glasses monomembrane or normal. Such machines allow the only vertical cut of the plate, for the following cuts orthogonal to the precedent is necessary to unload the cut strip or band manually, to rotate it, always manually, of 90° and to reload her/it, always manually, on the machine.

In alternative it is known to apply to a most complex configuration of the operative unity that has to include the rotation of 90° of the head hands utensil, what a grindstone and a dangerous labor, for the maintenance of the strip or band of glass that remains situated superiorly in respect to the tool: in fact the operator has to interpose, as soon as the cut is operated, wood wedges between the two edges of the band subordinate and superior to prevent that this last falls.
Besides the notable cost of the car the exercise also results onerous in reason for the cost of the utensil (diamond grindstone) and of his limited life.
At the end the process, employing water for the principle of job and for the cooling of the utensil, involves onerous problems of treatment and disposal of the waste water containing abrasive particles and particles of glass.

They are also known procedure and machines for the cut of the normal glass, laminated and armored working through a hydraulic throw to elevated pressure in which the tool is constituted by the same throw of water containing abrasive particles.
This system is inconvenient for the cut of the glass stratified monomembrane and for the modest speed of the process and for the elevated cost of the due machinery to the necessity to employ pumps with high pressure.
Also this process, employing water for the principle of job, involves onerous problems of treatment and disposal of the waste water containing abrasive particles and particles of glass.

Performs principal than it forms object of the present application is therefore that to resolve the underlined technical problems eliminating the drawbacks of which to the quoted known technique and therefore contriving a procedure that allows of to realize in automatic or semiautomatic way the cut of a plate of glass, particularly of laminated non armored glass and therefore of not big thicknesses, for the splitting up in smaller pieces or bands, generally rectangular or polygonal or shaped.
Within the assignment above illustrated an ulterior purpose is that to get an automatic or semiautomatic procedure in the versions more simplified of the machines and in the version of shaped cut, that results economic.
Another purpose is that to get a procedure that allows of to effect the workmanships of splitting up of the plates reducing the occupation of area of the factory sensitively.
Another purpose is that to get a procedure that allows of to achieve a splitting up of the plate in contained times.
A further purpose is that to realize a procedure that allows of to achieve an optimal safety level for the operators on the employed machines.
Another important purpose is that to get a procedure that allows of to effect an easy manipulation of the plates in the sense to allow an optimization in their unloading, transport, workmanship, storing and consignment.
A further purpose is that to realize a procedure that allows of to employ machines with contained costs of exercise.
The assignment and the purposes above mentioned, as well as others that will appear subsequently more clearly, are reached by an automatic or semiautomatic procedure for the cut of the plates of glass and more particularly of plates of laminated not armored glass composed from at least two glasses and from at least an inclusive membrane between the same that it is characterized for the fact that said plates or splitting up of the same are maintained in a vertical position or slightly tilted in comparison to the vertical one in the execution, also in different sequence, of the following phases:
first cut of said plate according to a parallel line to a first side of the same to get a first band;
first translation of said first band and rotation of the same one;
second translation of said first band rotated for effecting a second cut of the same along a parallel line to a second separate side of said plate;
reiterations of the preceding phases untill the completion of the wanted splitting up in the progressive levels of said plate.

Ulterior characteristics and advantages will result mostly from the detailed description of a particular, but not exclusive, form of realization, illustrated in the attached tables of sketches in which:

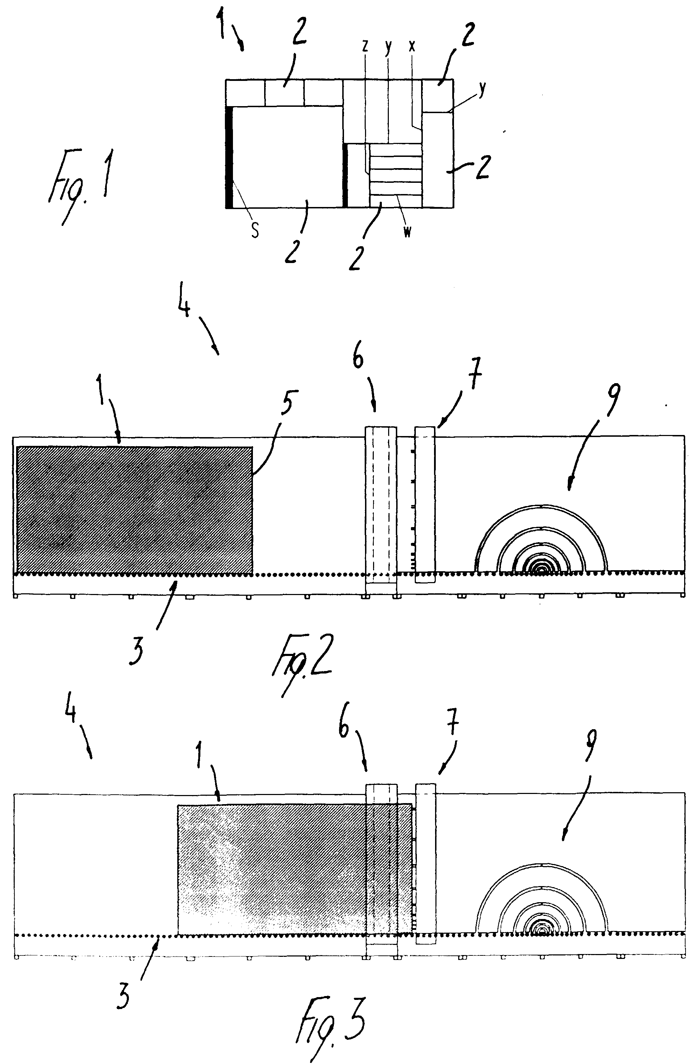

the fig. 1 illustrates a plate of glass on which an example of tracing is shown for the division on the bands or in requested plates for the following employment. With x the first level of cut is pointed out, with y the second, with z the third and with S the waste;
The fig. 2 illustrates the plate in his position of loading on the station of feeding of the cut table.
the fig. 3 and 4 illustrate the positioning of the plate for the execution of the first cut and following separation of the membrane;
the fig. 5 illustrates the strip or figurative band displaced through a mobile bridge;
the fig. 6, 7 and 8 illustrate the rotation of the band and the translation of the same;
the fig. 9 illustrates the getting of the first ended piece, got therefore through two levels of cut x and y, moved in the station of unloading of the machine and destined to the following workmanships.

With reference to the figures previously quoted, with the number 1 is indicated a plate of glass on which has brought an example of tracing of a possible subdivision in more bands for the following employment; with x the first level of cut is pointed out, with y the second, with z the third, with w the fourth and so away, while with S are underlined the wastes.

The procedure foresees that said plate or the splitting up of the same one in bands 2, are maintained in a vertical position or slightly tilted in comparison to her vertical one in the execution of the varied phases of workmanship, illustrated afterwards.

The plate 1 comes therefore to be set, in position of load, on a first station of feeding 3, for instance constituted by a conveyor, of a cut table, indicated globally with the number 4; with the term "cut table or cut bench" it is intended a machine or his only part that comes into contact with the plate of glass in correspondence of the zones where the operations of cut are effected as intended in their more complete meaning.

In fig. 3 are represented the positioning of the plate 1 in way from to bring the first side 5 vertical over a station 6 of incision, breaking and membrane separation, so that the first cut of the plate is carried out, according to a parallel line to that of the first side 5.

The station 6 can be constituted from at least a first fixed " bridge ", with such term intending a part of the machine that has a fixed position in comparison to the ground or to a loom lieing to the ground and that is constituted by a beam, with varied possible structural conformations, where the operations of incision, breaking and membrane separation happen.

With the term cutting we intend in fact the global operation of splitting up of the plate or the band of glass in pieces usable for the final employment, either for the execution of an only subdivision of a plate in two pieces, either one of the three phases in which the subdivision of a plate of laminated glass is articulated, subdivision consisting in the phases of incision (in the slang also said cut) in which the glass comes only engraved through a diamond tool, of breaking in which the glass is fractured in correspondence of the preceding trace of incision, of separation in which also the membrane of polyvinyl is cut or wrenched or melted.

The desired dimension for the cut is determined by the position of a mobile bridge 7 and of the relative reference of contrast with the first side 5 of the plate.

Such mobile bridge is constituted by a device, mobile on guides, with various possible structural conformations, where the operations of incision (in the traditional maachines) and of translation of the plate (in the machines with the procedure object of the present application) happen.

Such bridge mobile is also to achieve the following capture and translation of the strip or band 2 in direction of the mobile bridge 6 if this last has such dimensions from not to be transportable for the only action of the conveyor, constituent the station 3, working in correspondence of the inferior edge of the same band.

In the fig.4 the plate positioning is represented, that is repeated then for the following portions of the same plate, in such a way to bring the vertical line, already engraved and broken in the preceding station, in correspondence of a station of separation of the membrane (operation effected not in the case of monolithic glass, i.e. not laminated).

Alternative solutions are not excluded for the execution of the operations of incision, breaking and separation, for instance in an only station rather than in the two stations exposed in the figures 3 and 4.

A cut (in his/her complete meaning) of level x is so achieved.

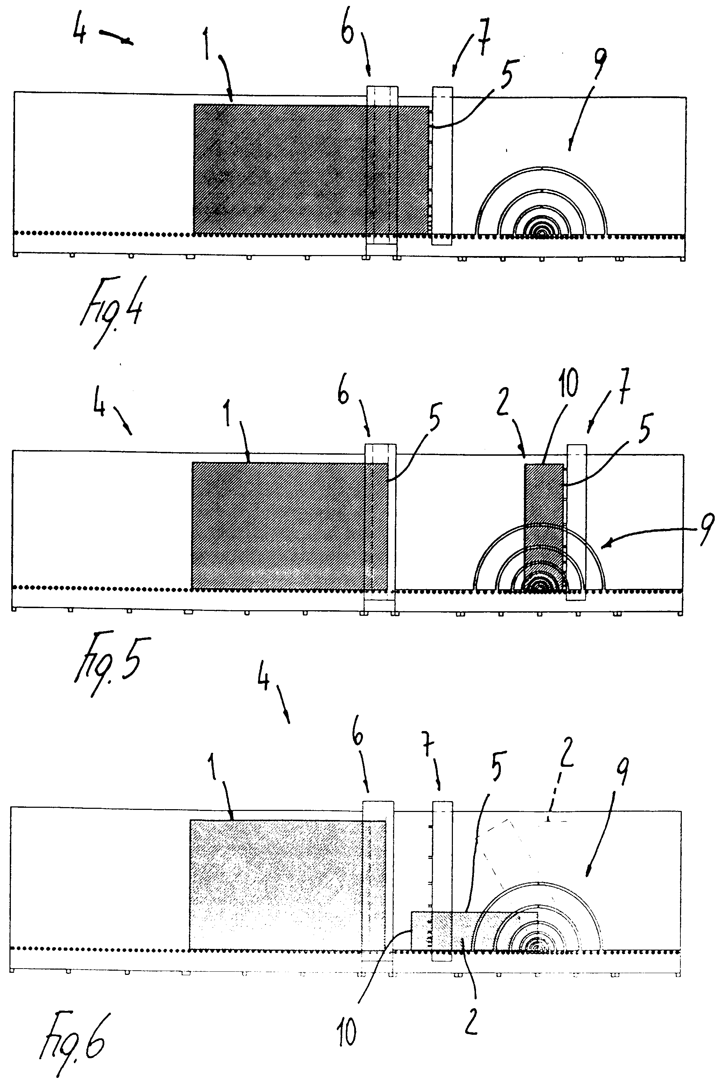

As illustrated in the following fig. 5, the strip or band 2, previously cut is traslated through the mobile bridge in correspondence of a station of rotation 9,

In such station the rotation of the strip 2 and the contemporary translation of the mobile bridge 7 are effected to the purpose of his anticipated positioning of measure of the dimension of the following cut.

Subsequently, as illustrated in the fig. 7, a second translation is carried out as well as the consequent positioning of the strip (that then it is repeated for the following portions of the same strip) in way to bring the vertical line destined to the cut (and parallel to a second side 10 of the band 2 adjacent the first side 5) in correspondence of the vertical station 6 of incision, cut and breaking to carry out the second cut.

This last is underlined in the fig. 8 in which the positioning of the strip is done (that then it is repeated for the following portions of the same strip) in way from to bring the vertical line, already engraved and broken in the preceding station, in correspondence of the station of separation of the membrane (operation not carried out in the case of monolithic glass, i.e. not laminated), so that to achieve a cut (in his more complete meaning) of level y.

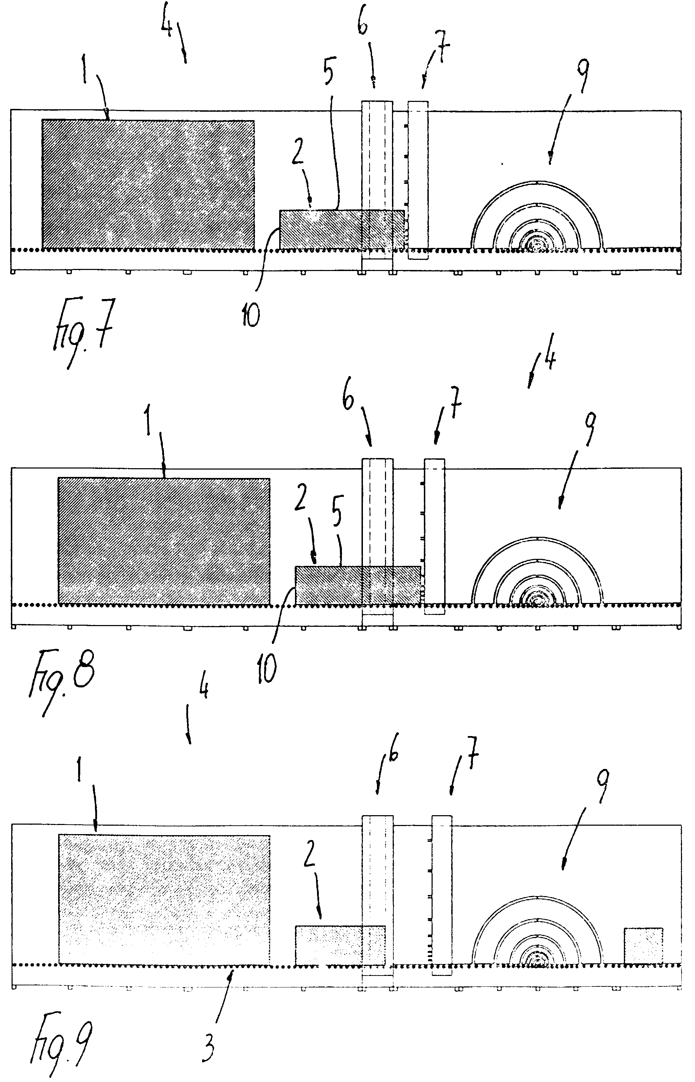

In fig.9 a first ended piece 11 is illustrated (got through two levels of cut x and y) moved in the station of unloading of the machine and destined to the following workmanships.

It goes from oneself that the following cuts for the complete splitting up of the big plate or the plate in formats destined to the following employments, for example for the manufacture of insulating glass door, they happen for repetition of the phases above described, eventually pushes also to the following levels of cut z, w, etc.

It's so ascertained as the invention has reached the assignment and the purposes above mentioned since the procedure allows of to resolve all the aspects of automation, of reduction of the busy space of the establishment, of inexpensiveness of the machine working with the procedure object of the present invention so that to constitute a revolution in the field of the cut of the laminated not armored glass in how much the actual known technique consists into the carrying out of the incision, the breaking and the separation of the membrane entirely on so said "cutting tables" horizontal on which the bridge of cut works entirely according to a direction of the plate and for the cut according to a different direction it's necessary traslare, to rotate manually and to bring the plate in correspondence of the same bridge of cut or to transfer, or manually or automatically the plate on a second "cutting table" avente consecutive positioning but orthogonal to the precedent on which the relative " bridge " effects the necessary cuts orthogonal to those effected on the first table.

From the process of storing of the big plate (or of the generic plate) actually till the transfer to the plants for workmanship following to the cut, the glass has not been ever changed of position (i.e. it is always remained in vertical position or slightly tilted respect his vertical one).

The procedure can be completely automatic and realizable (unlike the known procedures) at contained costs and with notable saving of encumbrance of the relative machines.

They achieved enormous advantages of it is from the ergonomic point of view as well safety as well of occupation of space.

## Claims

1. automatic or semiautomatic procedure for the cutting of the plates of glass, particularly of plates of laminated not armored glass, composed by at least two glasses and by at least an inclusive membrane between the same, that is characterized for the fact that said plates or splitting up of the same, are maintained in a vertical position or slightly inclined in comparison to her vertical one in the execution, also in different sequence, of the following phases:
first cut of said plate according to a parallel line to a first side of the same one to get a first band;
first translation of said first band and rotation of the same one;
second translation of said first band rotated for effecting a second cut of the same along a parallel line to a second separate side of said plate;
reiterations of the preceding phases untill the completion of the wanted splitting up in the progressive levels of said plate.

2. procedure as to the claim 1 that is characterized for the fact that said plates or splitting up of the same, are maintained in a plan of position with an angle 0° =< β <= 90° in comparison to a horizontal plan.

3. procedure as to the claims 1 or 2 that is characterized for the fact that said second cut (and the possible corresponding following phases) orthogonal to said first cut (and in the possible corresponding following phases) can happen or in correspondence of a first fixed bridge constituent a station of vertical incision, breaking and separation vertical used for achieving also said first cut, or in correspondence of a second fixed bridge, adjacent the first one.

4. procedure as to the claims 1 or 2 that is characterized for the fact that the desired dimension for said second cut is determined by the position of a mobile bridge and the relative reference of contrast with the first side of said plate.

5. procedure as to the claims 1 or 2 that is characterized for the fact that said mobile bridge allows the following clamping and translation of said band or strip in direction of said mobile bridge if he band or strip dimensions are not suitable to be transportable for the only action of a conveyor, constituent the first station of feeding.

6. procedure as to the claims 1 or 2 that is characterized for the fact that said first band, once engraved and broken, receives a treatment to achieve the separation of said membrane through mechanics, thermal, electronic or combined means.

7. procedure as to the claims 1 or 2 that is characterized for the fact that said first band, previously cut, traslates through said mobile bridge in corrispondence of a station of rotation where said first band is rotated of 90° while is said mobile bridge moves for the purpose of his anticipated positioning for the measurement of the dimension of the following cut.

8. procedure as to the claims 1 or 2 and 7 that is characterized for the fact that subsequently said first band or strip receives a second translation and the consequent positioning in way bring the vertical line destined to be cut, and parallel to a second side adjacent to said first side, in correspondence of said first station of feeding to receive said second cut.

9. procedure as to one or more than the preceding claims that is characterized for the fact that the levels of cut following to the second can happen, other than in condition of mutual orthogonality, also according to lines generically inclined for the obtaining of polygonal forms.

10. procedure as to one or more of the preceding claims, that is characterized by the fact that, for combined action of the movement of the plate or portion of it, in said conveyor and of the movement of a head of incision, present in said bridges, shaped incisions can be obtained.

11. procedure as to one or more than the preceding claims, that is characterized for the fact that for action combined of said head of incision, moving according to a vertical axis, and of the relative bridge containing said head of incision, not more fixed but moving according to a horizontal axis, shaped incisions can be obtained.

12. cutting table that is characterized for the fact to include means to work, in automatic or semiautomatic way, plates of glass, particularly plates of laminated not armored glass or splitting up of the same, maintaining them same in a vertical position or slightly inclined in comparison to her vertical one.

13. table as to the claims 9 and 12 that is characterized for the fact to foresee means to allow the obtaining of the inclined cut of said band or strip through the inclination of the bridge or of the bridges of cutting

14. procedure and table as to one or more than the preceding claims that is characterized for what described and illustrated in the attached tables of sketches.
